# EUROPÄISCHE PATENTANMELDUNG

(11) **EP 1 736 614 A2**
(43) Veröffentlichungstag der Anmeldung: **27.12.2006**
(21) Anmeldenummer: 06115958.8
(22) Anmeldetag: 23.06.2006
(51) Int. Cl.: E04F 15/024, F24F 13/068

(54) **Belüftungsboden**

(30) Priorität: 25.06.2005 DE 202005009987 U
(71) Anmelder: Ambros Schmelzer & Sohn GmbH & Co. KG, 95679 Waldershof (DE)
(72) Erfinder: Schmelzer, Gerhard, 95679 Waldershof (DE)
(74) Vertreter: Kinnstätter, Klaus

(57) **Zusammenfassung**

Die Erfindung betrifft einen Belüftungsboden zum Be- und/oder Entlüften darauf befindlichen Gutes, aufweisend eine Unterkonstruktion, die an einem Aufstellboden verankert ist, mit darauf gelegten begeh- und/oder befahrbaren Metallplatten mit Löchern. Die Unterkonstruktion besteht aus Längsträgern (1) mit Durchbrüchen (2) für die Luftzirkulation. Querverlaufend sind streifenförmige Lochabdeckungen (3) aufgelegt, die einen abgekanteten Längsrand (4) an der einen Seite und einen abgekanteten Längswinkel (5) an der anderen Seite aufweisen und mit einander verschachtelt verlegt sind.

## Beschreibung

Die Erfindung betrifft einen Belüftungsboden zum Be- und/oder Entlüften darauf befindlichen Gutes mit den im Oberbegriff des Anspruches 1 angegebenen Merkmalen

Aus der DE 28 29 343 A1 sind gelochte und mit Erhebungen gegen Ausrutschen versehene Bodenelemente aus abgekanteten Blechen oder U-förmigen Profilen aus Leichtmetall zur Herstellung eines Bodens, insbesondere für Stallungen, bekannt. Die an den Rändern abgekanteten, gelochten Bleche oder die gerippten und gelochten Stege zeichnen sich dadurch aus, dass die Ränder der Löcher, zumindest an der Oberseite, abgerundet und/oder die seitlichen Rippen oder Nuten mit Ausnehmungen zum Abführen von Schmutz und Reinigungsmittel versehen sind. Die Strangpressprofile oder auch abgekanteten Bleche werden im Verbund zu einem Stallboden zusammengesetzt, wobei in den Verbindungsnuten Ausnehmungen zum Abfließen der Flüssigkeit ebenfalls eingebracht sind. Die Flächen sind mit Lochungen durchsetzt. Ein solcher Boden kann grundsätzlich auch als Belüftungsboden eingesetzt werden, wobei die abgekanteten oder nach unten vorstehenden, senkrechten Trägerschenkel durchgehend sind, so dass parallele Kanäle entstehen.

Aus der DE 203 17 987 U1 sind Belüftungsgitter zum Be- und/oder Entlüften eines Raumes, insbesondere eines mit Schüttgut befüllten Raumes, bekannt, die eine Gitteranordnung aus Traversen bildenden Schenkeln, die aus Blechstreifen durch Abwinkeln geformt sind und einen definierten Abstand zu einem Aufstellboden herstellen, aufweisen. Zwischen den Traversen angeordnete Wandungen sind mit Schlitzen zum Durchtritt von Luft versehen. Die Gitteranordnung besteht aus, aus Blechstreifen geformten, tunnelförmigen Segmenten, wobei jedes Einzelsegment aus einem Blech im Wesentlichen U-förmig ausgeformt ist und an der Oberseite eingestanzte, im Verhältnis zur Breite und Länge des Einzelsegmentes, großflächige Durchdringungsöffnungen aufweist. Ein damit hergestellter Verbund aus parallel angeordneten Segmenten, die durch Punktverschweißung der Schenkel mit benachbarten Segmenten oder durch einen umlaufenden, die Oberfläche nicht begrenzenden Rahmen zusammengehalten sind, wird mit Lochplatten abgedeckt. Zur Erhöhung der statischen Belastung sind in einer Ausführungsform die freigeschnittenen Bleche der Lochungen abgewinkelt und so lang ausgeführt, dass sie ebenfalls auf dem Aufstellboden aufstehen. Die seitlichen Schenkel des U-förmigen Tunnels sind an einer Seite als Winkelschenkel mit abgewinkeltem Bodenrand ausgebildet, auf welchem die untere Stirnfläche des zweiten Schenkels eines parallelen, nächstfolgenden U-förmigen Tunnels aufsetzbar ist, wobei der Abstand der unteren Stirnfläche des zweiten Schenkels gegenüber dem Boden um die Stärke des Bodenrandes verringert ist, so dass die aneinander gereihten Tunnelsegmente eine geschlossene, ebene Oberfläche bilden.

Aus der DE-AS-1 079 879 ist eine Anlage zum Trocknen und Belüften von Heu oder dergleichen mit einem bodenseitigen Druckraum bekannt, der eine Unterkonstruktion mit länglichen Stützen aufweist, auf denen ein Lattenrost aufliegt. Mittels eines Ventilators wird Luft in den in zwei Abteilungen unterteilten Druckraum gedrückt.

Es hat sich gezeigt, dass ein aus Belüftungsgittern erstellter Belüftungsboden mit höherem Abstand zum Aufstellboden, der gewünscht ist, um großflächig Luft ungehindert einblasen zu können, in der Herstellung zu sehr aufwendigen und schweren Konstruktionen der tunnelförmigen Segmente führt, die zudem nicht leicht trennbar oder einzeln aufnehmbar sind. Lediglich die aufgelegten Lochbleche können entfernt werden. Die Bodenunterkonstruktion einzelner, tunnelförmiger Segmente ist nur schwerlich entfernbar oder erneuerbar. Des Weiteren hat sich gezeigt, dass ein hoher Materialverschnitt bei der Herstellung der Segmente gegeben ist.

Der Erfindung liegt die Aufgabe zugrunde, einen Belüftungsboden modular aufzubauen, so dass er beliebig erweiterbar und auch an verschiedene Raumumfänge und -größen anpassbar ist, wie beispielsweise in rechteckförmigen Räumen, runde Silos, und dass z. B. bei Verwendung in einem Getreidespeicher durchgefallener Staub auch durch partielles Aufnehmen des Bodens leicht entfernbar ist, sofern nicht durch andere Absaugvorrichtungen der Staub aus dem Zwischenraum entfernbar ist. Des Weiteren sollen die transportierbaren Elemente des Belüftungsbodens einfach herstellbar und so leicht sein, dass sie auf einfache Weise zusammengesetzt werden können. Ein weiteres Ziel ist es, den Materialverschnitt gering zu halten.

Gelöst wird die Aufgabe durch Ausgestaltung des Belüftungsbodens gemäß der im Anspruch 1 angegebenen technischen Lehre.

Gegenüber dem vorbekannten Stand der Technik gemäß der DE 203 17 987 besteht ein Belüftungsboden nach der Erfindung aus einer Unterkonstruktion aus im Wesentlichen parallel angeordneten Längsträgern aus T-, I- oder Rechteckprofilen mit definierten Längen, Höhen und Wandstärken. Damit die Luft vollständig zirkulieren kann, sind in den senkrechten Wänden der Längsträger Durchbrüche vorgesehen. Dies können vollständig freigeschnittene Durchbrüche oder aber auch durch Stanzung an drei Seiten freigeschnittene Lochstreifen sein, die herausgebogen sind, wodurch insbesondere ein Durchtreten des Staubes aus einem Kanal in den nächsten weitgehend verhindert wird. Es können auch zur Realisierung eines Belüftungsbodens Längsträger mit verschiedenen Längen kombiniert werden. Zweckmäßigerweise weisen die Längsträger an den Standwänden im Bereich ihrer Stoßkanten Bohrungen auf, so dass sie mittels eines Koppelbleches miteinander verbindbar sind. Um eine Demontage und eine einfache Montage zu ermöglichen, empfiehlt es sich, die Koppelbleche anzuschrauben. Im Bedarfsfall können sie auch angeschweißt werden. Als besonders einfach und preiswerte Konstruktion hat sich ein T-Träger erwiesen. Soweit kein Strangprofil verwendet wird, können hier zwei U-Bleche auf einfache Weise miteinander verschweißt werden, z. B. Beispiel durch Punktschweißung. In den unteren, seitlichen Schenkelblechen sollten zur Befestigung auf dem Aufstellboden Durchgangsbohrungen eingebracht sein, so dass die unteren Schenkel des I-Trägers an dem Aufstellboden angeschraubt werden können. An der Oberseite brauchen solche Bohrungen grundsätzlich nicht vorgesehen zu sein. Sie können aber auch für eine Klammer- oder Hakenbefestigung der Lochabdeckungen ebenfalls eingebracht sein.

Die streifenförmigen Lochabdeckungen weisen in ihrem Aufbau eine U-förmige Ausprägung auf, wie sie auch aus dem genannten Gebrauchsmuster bekannt ist. Sie vereinen allerdings Lochplatte und Trägersystem in sich. Die Lochabdeckung ist aus Blech gefertigt und weist in Längsrichtung an der einen Längsseite mindestens einen nach unten im Winkel von 90° abgekanteten Rand auf und an der gegenüberliegenden Längsseite mindestens einen abgekanteten Winkel aus einem nach unten in einem Winkel von 90° sich erstreckenden Schenkel und einem daran nach außen stehenden Schenkel, wobei die Höhen des abgekanteten Randes und die des abgekanteten Winkels derart aufeinander abgestimmt sind, dass bei Aufsetzen des abgekanteten Randes der nächstfolgenden Lochabdeckung auf den abgekanteten Winkel der vorhergehenden Lochabdeckung die Oberseite beider Lochabdeckungen eine durchgehende Oberfläche bildet. Um die gewünschte statische Belastbarkeit sicherzustellen, sind dabei die Lochabdeckungen quer zu den Längsträgern verlaufend auf diese aufgelegt, so dass die abgebogenen Winkel oder Ränder nur eine geringe Höhe aufweisen müssen, die statisch so zu berechen ist, dass nur eine zulässige Durchbiegung zwischen den benachbarten parallel angeordneten Längsträgern gegeben ist. Auch diese Lochabdeckungen werden in verschiedenen Längen hergestellt und quer auf die Längsträger aufgelegt. Um ein leichtes Abnehmen der Lochabdeckung von den Längsträgern zu ermöglichen, ist eine Verschraubung der einzelnen Lochabdeckungen in Reihe nicht vorgesehen, sondern es werden lediglich Trägerprofile, beispielsweise quadratische Trägerprofile, auf die T-Träger und in diesem Bereich die beiden aneinanderstoßenden Enden einer Lochabdeckung aufgelegt. Es ist ersichtlich, dass ein solcher Verbund von Lochabdeckungen hergestellt werden kann, der ein Begehen, ein Befahren und insbesondere eine Beschüttung mit Schüttgut, zum Beispiel mit Getreide, gestattet.

Vorteilhafte Weiterbildungen der Erfindung sind in den Unteransprüchen im Einzelnen angegeben. So können die Lochabdeckungen auch an den Stirnseiten mit abgekanteten Rändern versehen sein, so dass die Unterlegung eines Trägerprofils an den Stoßstellen nicht notwendig ist. An den Stirnseiten können auch, genauso wie an den Längsseiten, an der einen Seite ein abgekanteter Rand vorgesehen sein und an der anderen Seite ein abgekanteter Winkel, um die gleiche Fügetechnik zum Einsatz bringen zu können, die auch an den Längsseiten realisiert ist. Dies hat den Vorteil, dass keine Trägerprofile zusätzlich eingefügt oder angeschweißt werden müssen. Es ist ferner ersichtlich, dass selbst bei dieser Ausgestaltung kein nennenswerter Materialverschnitt gegeben ist, da lediglich die Ecken ausgestanzt werden müssen.

Anstelle der hier angesprochenen Bleche können aber auch Strangprofile verwendet werden, sofern an den Stirnseiten keine Ränder abgewinkelt werden müssen. Es können also die Lochabdeckungen sowohl aus Stahlblech, insbesondere verzinktem Stahlblech, als auch aus Aluminium bestehen oder als Strangprofile hergestellt und verlegt sein.

Die durch die Erfindung gegebene Gewichtsreduzierung bei gleichzeitigem relativ hohem Abstand zum Aufbauboden ist offensichtlich. Die Lochabdeckungen sind selbst bei Längen von 2 Metern von den Monteuren leicht handhabbar. Dasselbe trifft auch für die Längsträger zu, die vorgefertigt an einer Baustelle verlegt werden.

In die Oberseite der Lochabdeckung können Schlitzlöcher eingebracht sein. Dies kann beispielsweise in Reihen erfolgen. Bei einer Breite einer Lochabdeckung von ca. 300 mm können so beispielsweise drei Reihen Schlitzlöcher angeordnet sein. Dies können Durchgangslöcher sein, oder aber auch, wie vorher schon angegeben, ausgeformte Stirnlöcher, so dass das Schüttgut nicht durchfallen kann, sondern durch die Höhe der Lochspalte zurückgehalten wird. Andererseits kann von unten in gewünschter Weise durch jeden Spalt Luft in das Gut gedrückt werden. Diese Art der Löcher können nun gleichförmig oder aber auch ungleichförmig, reihenmäßig, versetzt, gleichläufig oder gegenläufig in einer oder mehreren Reihen angeordnet sein, zu welchem Zweck lediglich das Stanzbiegewerkzeug entsprechend zum Einsatz gebracht werden muss bzw. die Stanzbiegeköpfe entsprechend angeordnet sein müssen. In der Fertigung hat dies den Vorteil, dass auch das Blech von der Rolle verarbeitet werden kann. In einer Rollen-Kanteneinrichtung werden dabei vor dem Stanzen oder nach dem Stanzen die Ränder und der Winkel umgebogen.

Zur statischen Verstärkung kann auch vorgesehen sein, dass der Rand verlängert und nach oben, und zwar innenseitig, umgeschlagen wird, so dass praktisch die doppelte Wandstärke an der einen Längsseite der Lochabdeckung gegeben ist. Es kann ferner vorgesehen sein, dass zur Lagefixierung in dem abstehenden Schenkel eines Winkels nach oben gerichtete Sicken oder hochstehende Abkantungen eingearbeitet sind, die mit dem senkrechten Schenkel eine U-förmige Lagernut für den Rand der nächstfolgenden Lochabdeckung bilden.

Die Erfindung wird nachfolgend anhand der in den Zeichnungen dargestellten Ausführungsbeispiele ergänzend erläutert. Die Zeichnungen enthalten ferner zweckmäßige Abmessungen.

### In den Zeichnungen zeigen:

- Figur 1: einen Ausschnitt aus einem Längsträger, wie er erfindungsgemäß zum Einsatz kommt, mit aufgelegten Lochabdeckungen,
- Figur 2: eine Längsansicht auf die Längsträger gemäß Figur 1 mit aufgelegten Lochabdeckungen im Ausschnitt,
- Figur 3: einen Längsträger als I-Träger in der Draufsicht,
- Figur 4: den Längsträger gemäß Figur 3 in der Seitenansicht,
- Figur 5: den Längsträger in der Draufsicht unbemaßt,
- Figur 6: den Längsträger gemäß den Figuren 3, 4 und 5 in der Seitenansicht,
- Figur 7: eine besondere Ausbildung des waagerechten Schenkels des abgekanteten Winkels einer Lochabdeckung,
- Figur 8: eine besondere Ausbildung eines abgekanteten Längsrandes einer Lochabdeckung,
- Figur 9: die Lochabdeckung in der Seitenansicht schematisch,
- Figur 10: eine Lochabdeckung in der Draufsicht, und
- Figur 11: ein Verlegungsschema der Längsträger 1 in einem Rundsilo von beispielsweise 6,24 Metern Innendurchmesser als Auszug.

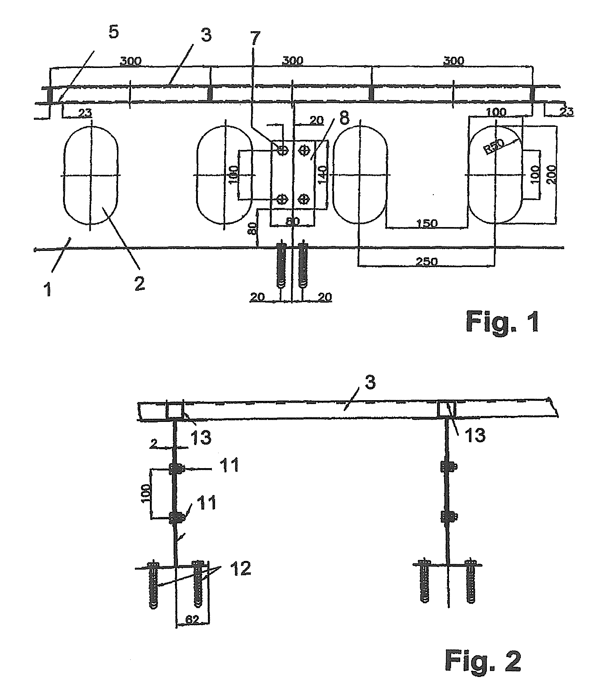

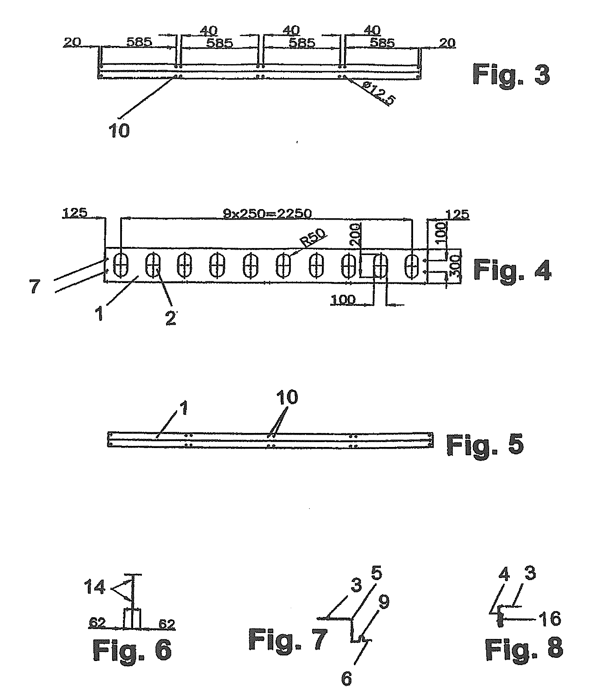

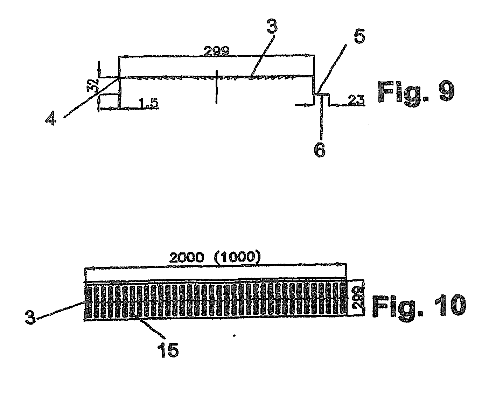

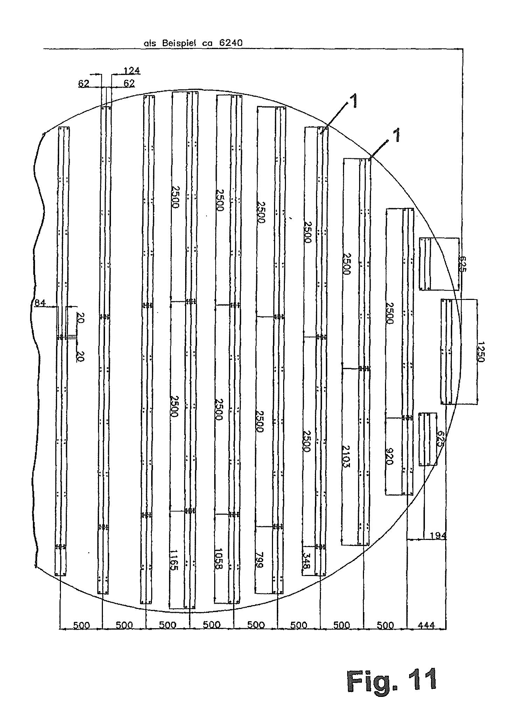

Aus Figur 1 ist der grundsätzliche Aufbau des Lüftungsbodens nach der Erfindung ersichtlich. Die Unterkonstruktion besteht aus Längsträgern 1, die in ihren senkrechten Wandabschnitten beabstandet zueinander Durchbrüche 2 aufweisen, die in diesem Ausführungsbeispiel freigeschnittene Durchbrüche sind. Diese werden in bekannter Weise in Stanztechnik in ein in ein U-Profil gebogenes Blech vor dem Biegen oder nach dem Biegen eingebracht. Ein Längsträger mit einer Länge von 2,50 Meter ist beispielsweise aus Figur 4 ersichtlich. Ein solcher besteht aus zwei U-förmig gebogenen Blechen, beispielsweise Bleche mit einer Stärke von 2 mm. Diese werden, wie aus Figur 6 ersichtlich, punktuell verschweißt, so dass jeweils Schweißpunkte 14 entstehen. Die Schenkeltiefen der U-förmigen Blechteile betragen im Ausführungsbeispiel 62 mm, so dass eine Auflagebreite obenseitig von 124 mm gegeben ist. Die unteren Schenkel weisen Bohrungen 10 auf, die aus den Figuren 3 und 5 sowie aus den Figuren 1 und 2 ersichtlich sind, in die Schlüsselschrauben 12 eingesetzt werden, um sie in Dübel im Unterboden einschrauben zu können. In die entsprechenden Löcher werden beispielsweise Nylondübel gesetzt. Im Bereich der Stoßkanten der Längsträger 1 sind Bohrungen 7 eingebracht, wie aus Figur 1 und 4 ersichtlich ist. Unter Verwendung von Verbindungsplatten 8 mit deckungsgleichen Bohrungen können zwei aneinanderstoßende Längsträger 1 miteinander verschraubt werden. Die Schrauben 11 sind aus Figur 2 ersichtlich. Dadurch ist es möglich, besonders lange Längsträger auf größeren Böden in Reihe anzuordnen. Auf diese Längsträger werden querverlaufend Lochabdeckungen 3 aufgelegt, die den befahrbaren und begehbaren Boden bilden. Diese sind lose aufgelegt, können aber auch, wenn in den oberen Schenkel des Längsträgers 1 Bohrungen eingebracht sind, hieran mittels Klammerhaken zusätzlich befestigt sein. Die Lochabdeckung 3 ist in den Figuren 9 und 10 detailliert dargestellt, in den Figuren 7 und 8 als zweckmäßige Abkantungsränder. Eine Lochabdeckung 3 nach der Erfindung besteht aus einem Blechstreifen, der in der Oberseite Schlitzlöcher 15 aufweist. Diese sind in drei Reihen in den Blechstreifen eingestanzt. Wie aus Figur 9 ersichtlich, handelt es sich dabei nicht um Freischnitte, sondern um an drei Seiten freigeschnittene und durch Abbiegung nach unten gebildete Löcher mit seitlichem Lufteintritt, so dass das Schüttgut nicht hindurch fallen kann. Es können aber auch kleinere Durchgangslöcher vorgesehen sein, um dies zu verhindern und um gleichzeitig auch einen Luftaustritt nach oben zu ermöglichen, wenn in den Unterboden Luft eingeblasen wird. Die Lochgröße ist darüber hinaus an das Schüttgut, das zum Beispiel Getreide, Mais oder ein anderes industrielles Gut sein kann, anpassbar. Die Lochbleche 3 selbst weisen, wie aus Figur 9 ersichtlich ist, an der einen Seite einen nach unten stehenden abgekanteten Rand 4 auf, der im Ausführungsbeispiel 32 mm hoch ist, und an der anderen Längsseite einen nach unten abgekanteten Winkel 5 mit einem sich nach außen erstreckenden Schenkel 6, der beispielsweise eine Länge von 23 mm aufweisen kann. Die Höhe des Winkels 5 ist so dimensioniert, dass der Rand 4 der nächstfolgenden Lochabdeckung 3 auf den unteren Schenkel 6 unter Berücksichtigung der Materialstärke, die im Ausführungsbeispiel 1,5 mm beträgt, aufgelegt werden kann, wobei gleichzeitig eine durchgehende Oberfläche gegeben ist. Die Lochschlitze 15 können auch aus einer Reihe von kleineren Löchern bestehen, die durch Abbiegung von an drei Seiten freigeschnittenen Segmenten bestehen, so dass praktisch ein Schlitzloch aus einer bestimmten Anzahl von kleineren Schlitzlöchern besteht. Dies ist beispielsweise aus Figur 9 ersichtlich. Dem Fachmann eröffnen sich hier verschiedenste Möglichkeiten der Lochausgestaltung. Die Lochabdeckungen 3 werden zweckmäßigerweise in einer Länge von 2 Metern bzw. 1 Meter vorgefertigt und können so verlegt werden. Unter Berücksichtigung dieser Abmessungen sind die Längsträger in einem Abstand von 500 mm beispielsweise zu verlegen, wie aus Figur 11 ersichtlich ist. Dabei können unterschiedlich lange Längsträger 1 miteinander verbunden und abgestuft verlegt werden. Es ist auch möglich, mittels einer Trennscheibe oder einer Schneidvorrichtung die Längsträger für den Bedarf vor Ort zuzuschneiden, und dann an dem Unterboden anzuschrauben, so dass sich das z. B. in Figur 11 dargestellte Verlegungsschema ergibt. Auf die Längsträger 1 werden sodann die Lochplatten 3 querverlaufend aufgelegt und sind praktisch durch ihre Verbindungstechnik miteinander verbunden. Bei runder Ausführung müssen die Lochabdeckungen 3 im Randbereich zugeschnitten werden.

Figur 8 zeigt, dass durch geeignete Anbringung von Erhöhungen an dem Schenkel 6 des abgekanteten Winkels 5 an der Lochabdeckung 3 eine Führungsnut gegeben ist, um den abgewinkelten Rand 4 des Folgebleches einsetzen zu können, ohne dass es seitlich vorgezogen werden muss, so dass schon beim Verlegen eine Positionsfixierung gegeben ist und diese nicht erst durch Andrücken erzielt werden muss. Figur 7 zeigt zudem, dass eine Verstärkung des Verbundes möglich ist, indem der verlängerte Rand 4 nach oben umgebogen wird und so praktisch der abgewinkelte Rand eine Materialstärke von 3 mm bei einer Blechstärke von 1,5 mm aufweist.

Die Erfindung ist nicht nur auf das dargestellte Ausführungsbeispiel beschränkt. Die dort angegebenen Abmessungen beziehen sich auf einen Siloboden, der normalerweise nicht befahren wird. Die gleiche Konstruktion ist aber auch anwendbar für einen Hallenboden, der befahrbar ist.

Bei schweren Lasten müssen die statischen Parameter bei der Dimensionierung der Bleche, der Abstandshöhe der Längsträger und bei den Schenkellängen entsprechend berücksichtigt werden.

### Bezugszeichenliste

- 1: Längsträger
- 2: Durchbruch
- 3: Lochabdeckung
- 4: abgekanteter Rand
- 5: abgekanteter Winkel
- 6: Schenkel (nach außen stehend)
- 7: Bohrungen
- 8: Verbindungsplatte
- 9: Erhöhung
- 10: Bohrungen
- 11: Schrauben
- 12: Schlüsselschrauben
- 13: Quadratrohre
- 14: Punktschweißung
- 15: Schlitzlöcher
- 16: Endabschnitt

## Patentansprüche

1. Belüftungsboden zum Be- und/oder Entlüften darauf befindlichen Gutes, aufweisend eine Unterkonstruktion, die an einem Aufstellboden verankert ist, mit darauf gelegten begeh- und/oder befahrbaren Metallplatten mit Löchern,
**dadurch gekennzeichnet,**
- **dass** die Unterkonstruktion aus parallel angeordneten Längsträgern (1) aus T-, I- oder Rechteckprofilen mit definierter Länge, Höhe und Wandstärke besteht, die in den senkrechten Wänden Durchbrüche (2) aufweisen,
- **dass** die Metallplatten streifenförmige Lochabdeckungen (3) aus Blech sind, die in Längsrichtung an der einen Längsseite mindestens einen nach unten im Winkel von ca. 90° abgekanteten Rand (4) und an der gegenüberliegenden Längsseite mindestens einen abgekanteten Winkel (5) aus einem nach unten in einem Winkel im Bereich von 90° erstreckenden Schenkel und einem daran nach außen stehenden Schenkel (6) aufweisen, wobei die Höhen des abgekanteten Randes (4) und die des abgekanteten Winkels (5) derart aufeinander abgestimmt sind, dass bei Aufsetzen des abgekanteten Randes (4) der nächstfolgenden Lochabdeckung (3) auf den abgekanteten Winkel (5) der vorhergehenden Lochabdeckung (3) die Oberseiten der beiden Lochabdeckungen (3) eine durchgehende Oberfläche bilden und die Lochabdeckungen (3) quer zu den Längsträgern (1) verlaufend auf diese aufgelegt sind.

2. Belüftungsboden nach Anspruch 1, **dadurch gekennzeichnet, dass** zusätzlich an einer Stirnseite der Lochabdeckungen (3) ein abgekanteter Rand angebracht ist und dass an der anderen Stirnseite ein abgewinkelter Rand angebracht ist.

3. Belüftungsboden nach Anspruch 1 oder 2, **dadurch gekennzeichnet, dass** die Längsträger (1) aus zwei U-förmig abgewinkelten Blechen bestehen, die zu einem I-Träger miteinander verschraubt oder verschweißt sind.

4. Belüftungsboden nach Anspruch 1, **dadurch gegekennzeichnet,** dass zur Stütze benachbarter Lochabdeckungen (3) an den Stoßstellen, die auf den Längsträgern (1) enden, Quadratrohre (13) quer zur Längsachse der Lochabdeckungen (1) aufgelegt sind, wobei die Längen der Lochabdeckungen (3) so gewählt sind, dass sie auf Längsträgern (1) enden.

5. Belüftungsboden nach Anspruch 1 oder 4, **dadurch gekennzeichnet, dass** die Lochabdeckungen (3) Schlitzlochabdeckungen mit mehreren parallelen Schlitzlochreihen sind.

6. Belüftungsboden nach Anspruch 5, **dadurch gegekennzeichnet,** dass die Schlitzlöcher (15) an drei Seiten freigeschnittene und an der vierten Seite heruntergebogene Blechfreischnitte sind, die einen seitlichen Luftspalt bilden.

7. Belüftungsboden nach Anspruch 6, **dadurch ge-**kennzeichnet, dass die Schlitzlöcher (15) in den Reihen gegenläufig verlaufend angeordnet sind.

8. Belüftungsboden nach Anspruch 1, **dadurch gegekennzeichnet,** dass die Durchbrüche (2) in den Längsträgern (1) Langlöcher sind.

9. Belüftungsboden nach Anspruch 1, **dadurch gegekennzeichnet,** dass die Längsträger (1) aneinandergereiht und miteinander über Verbindungsplatten (8) verbunden sind.

10. Belüftungsboden nach Anspruch 1, **dadurch gegekennzeichnet,** dass eine Verschraubung an dem Aufstellboden jeweils paarig vorgesehen ist, wobei die Bohrungen (10) in den seitlichen Schenkeln der Längsträger
(3) in Reihe angeordnet sind.

11. Belüftungsboden nach Anspruch 1, **dadurch gegekennzeichnet,** dass der untere Winkelschenkel (6) punktuelle oder eine durchgehende, mit dem senkrechten abgewinkelten Schenkel eine Lagerungsnut bildende Erhöhung (9), aufweist, wobei die Weite der Lagerungsnut mindestens so groß ist, dass der abgekantete Rand (4) der Folgelochabdeckung einsetzbar ist.

12. Belüftungsboden nach Anspruch 1, **dadurch gegekennzeichnet,** dass der abgekantete Rand (4) durch einen hochgebogenen Endabschnitt (16) an der Innenseite liegend verstärkt ist.
